# EUROPÄISCHE PATENTANMELDUNG

(11) **EP 2 896 938 A1**
(43) Veröffentlichungstag der Anmeldung: **22.07.2015**
(21) Anmeldenummer: 14004150.0
(22) Anmeldetag: 09.12.2014
(51) Int. Cl.: G01F 1/84, G01F 25/00

(54) **Verfahren zur Laufzeitermittlung der Signale in den Signalpfaden bei einem Coriolis Durchflussmesser**

(30) Priorität: 13.12.2013 DE 102013021136
(71) Anmelder: ABB Technology AG, 8050 Zürich (CH)
(72) Erfinder: Wiederhold, Frank, 34369 Hofgeismar (DE)
(74) Vertreter: Marks, Frank

(57) **Zusammenfassung**

In Coriolis Massendurchflussmessgeräten werden sehr kleine Phasendifferenzen zwischen zwei oder mehr sinusförmigen Signalen (1, 2, 3) gemessen. Durch unterschiedliche Laufzeiten in den einzelnen Signalpfaden (21, 22, 23) können Messfehler entstehen. Diese Erfindung betrifft ein Verfahren zum Messen der Laufzeitdifferenzen zwischen den einzelnen Signalpfaden (21, 22, 23). Dadurch ist es möglich, die Phasendifferenz-Messwerte zu korrigieren und die Laufzeitfehler zu eliminieren.

## Beschreibung

Die Erfindung betrifft ein Verfahren zur Laufzeitermittlung der Signale in den Signalpfaden bei einem Coriolis Durchflussmesser.

Durchflussmessgeräte vom Coriolistyp sind allgemein bekannt und beispielsweise in der DE 103 56 383 A1 beschrieben. Jeder Coriolis-Massedurchflussmesser der hier interessierenden Art basiert auf folgendem physikalischen Prinzip: Eine Erregungseinheit versetzt das Messrohr in Schwingung. Die erfassten Schwingungen an den Ein- und Ausfluss-Aufnahmepunkten weisen im Ruhezustand dieselbe Phase auf. Bei der Durchströmung des Coriolis-Massedurchflussmessers im Betriebszustand erfährt die Fluidmasse beschleunigte Schwingungsauslenkungen, die eine Corioliskraft erzeugen. Die ursprünglich sinusförmige, gleichförmige Schwingung des Rohres erfährt nun Einflüsse der entlang des Messrohres verteilten Corioliskraft, die bei den Ein- und Ausfluss-Aufnahmepunkten eine Phasenverschiebung verursacht. Es werden die Schwingungsphasen und Schwingungsamplituden an den Ein- und Ausfluss-Aufnahmepunkten mittels Ein- und Ausfluss-Sensoren aufgenommen und einer Auswerteeinheit zugeführt. Die Größe der Phasenverschiebung ist ein Maß für den Massedurchfluss. Durch eine Kalibrierung wird für jeden Coriolis-Massedurchflussmesser festgelegt wie die Phasenverschiebung mit dem Massenfluss zusammenhängt.

In derartigen Durchflussmessgeräten werden Phasendifferenzen zwischen zwei oder mehr sinusförmigen Messsignalen gemessen. Die Signale können die Sensorsignale und der Treiberstrom sein. Die Signale werden über Signalpfade geführt, die verschiedene Aufgaben erfüllen, wie Verstärkung, Pegelanpassung, Analog/DigitalWandlung. Eine Signalverarbeitung wertet die digitalen Signale aus und berechnet die Phasendifferenzen zwischen den Messsignalen.

Die messtechnische Herausforderung sind die sehr geringen Phasendifferenzen. Die Signale haben in ihren Signalpfaden Laufzeiten, die in den einzelnen Pfaden unterschiedlich sein können, beispielsweise durch Bauteiltoleranzen.

Aus dem Stand der Technik ist bekannt, durch einen Abgleich eine vorhandene Laufzeitdifferenz zu korrigieren. Nachteiligerweise sind durch diesen Abgleich all jene Laufzeitdifferenz, welche durch Drift über die Temperatur oder Alterung hervorgerufen werden, nicht kompensierbar. Insbesondere die unterschiedliche Drift der Laufzeiten hat einen Messfehler zur Folge, der sich darüber hinaus während der Betriebszeit der Messeinrichtung ändert.

Der Erfindung liegt daher die Aufgabe zugrunde, den für sich bekannten Massendurchflussmesser vom Coriolistyp dahingehend zu verbessern, dass durch Signallaufzeitdifferenzen hervorgerufene Messfehler ursachenunabhängig vermieden werden.

Erfindungsgemäß wird diese Aufgabe mit den Merkmalen des Patentanspruchs 1 gelöst. Vorteilhafte Ausgestaltungen der Erfindung sind in den rückbezogenen Ansprüchen angegeben.

Die Erfindung geht von dem für sich bekannten Massendurchflussmesser vom Coriolistyp aus, bei dem Phasendifferenzen zwischen zwei oder mehr sinusförmigen Nutzsignalen, welche jeweils unabhängig voneinander über strukturell gleichartige Signalpfade von einer jeweiligen Signalquelle zu einer gemeinsamen Signalsenke übertragen werden, gemessen werden.

Erindungsgemäß wird ein Testsignal generiert, welches mindestens zwei Nutzsignalen an gleichen Strukturelementen der individuellen, strukturell gleichartigen Signalpfade gleichzeitig und gleichphasig überlagert wird. An der gemeinsamen Signalsenke werden die Laufzeitdifferenzen des Testsignals über die jeweiligen Signalpfade ermittelt und die Phasendifferenzen der Nutzsignale über dieselben Signalpfade des Testsignals in Abhängigkeit von den ermittelten Laufzeitdifferenzen des Testsignals korrigiert.

Mit anderen Worten durchläuft dasselbe Testsignal verschiedene aber strukturell gleichartige Signalpfade zu derselben Zeit. Soweit sich die Signallaufzeiten über die verschiedenen Signalpfade unterscheiden, trifft dasselbe Testsignal über die verschiedenen Signalpfade an der gemeinsamen Signalsenke zu verschiedenen Zeitpunkten ein. Die Laufzeitdifferenzen des Testsignals werden mit den phasendifferenten Nutzsignalen verrechnet.

Dadurch werden Messfehler der Phasendifferenz - und damit des Durchflussmessignals der Durchflussmesseinrichtung - durch Laufzeitdifferenzen zwischen den einzelnen Signalpfaden vermieden.

Vorteilhafterweise ist das erfindungsgemäße Verfahren zu jeder Zeit und unter allen Betriebsbedingungen der Messeinrichtung anwendbar. Somit wird eine kontinuierliche Kompensation von Laufzeitdifferenzen der Nutzsignale auch über den Temperaturgang oder Drift erreicht.

Darüber hinaus sind kontinuierliche Kontrollen des Nullpunktabgleichs der Phasendifferenz in regelmäßigen Intervallen verzichtbar, weil die Laufzeitfehler kontinuierlich ermittelt und korrigiert werden.

Nach einem weiteren Merkmal der Erfindung wird dem Nutzsignal ein periodisches Testsignal überlagert, dessen Frequenz im Frequenzbereich des Nutzsignals liegt.

Nach einem weiteren Merkmal der Erfindung wird dem Nutzsignal ein periodisches Testsignal aus zwei Testfrequenzen überlagert, welche die obere und die untere Grenzfrequenz des Frequenzbereichs des Nutzsignals sind.

Die Erfindung wird nachstehend anhand von Ausführungsbeispielen näher erläutert. Die dazu erforderlichen Zeichnungen zeigen:
- Figur 1:: eine Prinzipdarstellung zur Ermittlung von Laufzeitdifferenzen in Signalpfaden
- Figur 2:: ein Diagramm zur grafischen Darstellung von Signallaufzeiten zur Ermittlung von Laufzeitdifferenzen
- Figur 3:: ein Diagramm zur grafischen Darstellung von Signallaufzeiten zur Korrektur von Laufzeitdifferenzen
- Figur 4:: ein Diagramm zur grafischen Darstellung von Gruppenlaufzeiten
- Figur 5:: eine Prinzipdarstellung einer Schaltungsanordnung zur Ermittlung von Laufzeitdifferenzen in Signalpfaden
- Figur 6:: eine weitere Prinzipdarstellung einer weiteren Schaltungsanordnung zur Ermittlung von Laufzeitdifferenzen in Signalpfaden

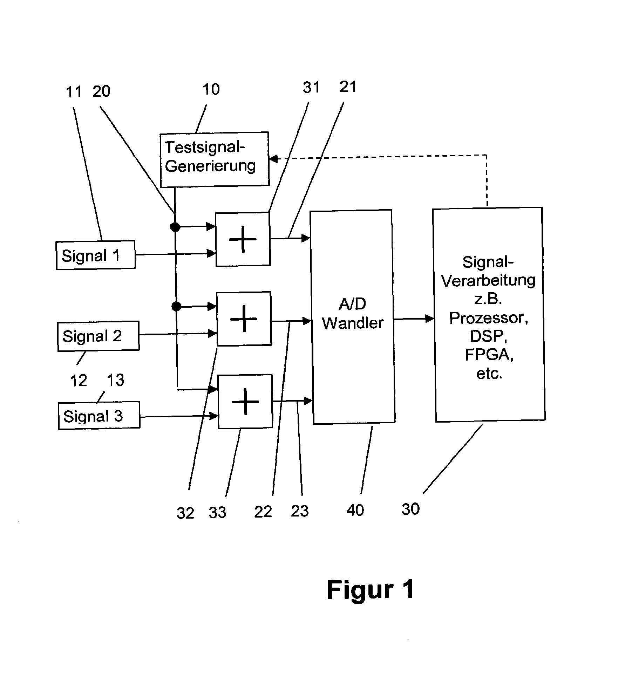

In der Figur 1 ist ein prinzipielles Strukturschaltbild zur Ermittlung von Laufzeitdifferenzen in verschiedenen Signalpfaden **21, 22, 23** zwischen individuellen Signalquellen **11, 12, 13** und einer gemeinsamen Signalsenke **30** sowie zu deren Kompensation gezeigt. Jedem Signalpfad **21, 22, 23** ist an seiner Signalquelle **11, 12, 13** jeweils eine Signalverknüpfung **31, 32, 33** verbunden, welche zwei Eingänge aufweist. Dabei ist jeweils ein Eingang mit der zugehörigen Signalquelle **11, 12, 13** verbunden und der andere Eingang an eine gemeinsame Testsignalquelle **10** angeschlossen.

Die Testsignalquelle **10** gibt ein Testsignal **20** aus, welches mittels der Signalverknüpfungen **31, 32, 33** mit den Nutzsignalen **1, 2, 3** der Signalquelle **11, 12, 13** verknüpft wird.

Der Signalsenke **30** ist ein A/D-Wandler **40** vorgeschaltet, an dem die Signalpfade **21, 22, 23** enden. In der Signalsenke **30** werden die Nutzsignale **1, 2, 3** sowie das Testsignal **10** rechentechnisch verarbeitet. Dazu weist die Signalsenke **30** mindestens einen für sich bekannten Prozessor, DSP oder FPGA auf.

In weiterer, vorteilhafter Ausgestaltung der Erfindung ist die Signalsenke **30** mit der Testsignalquelle **10** verbunden. Dabei ist die Testsignalquelle **10** als D/A-Wandler ausgebildet, welcher digitale Testmuster, die in dem Prozessor der Signalsenke **30** generiert werden, als analoge Testsignale **20** ausgibt.

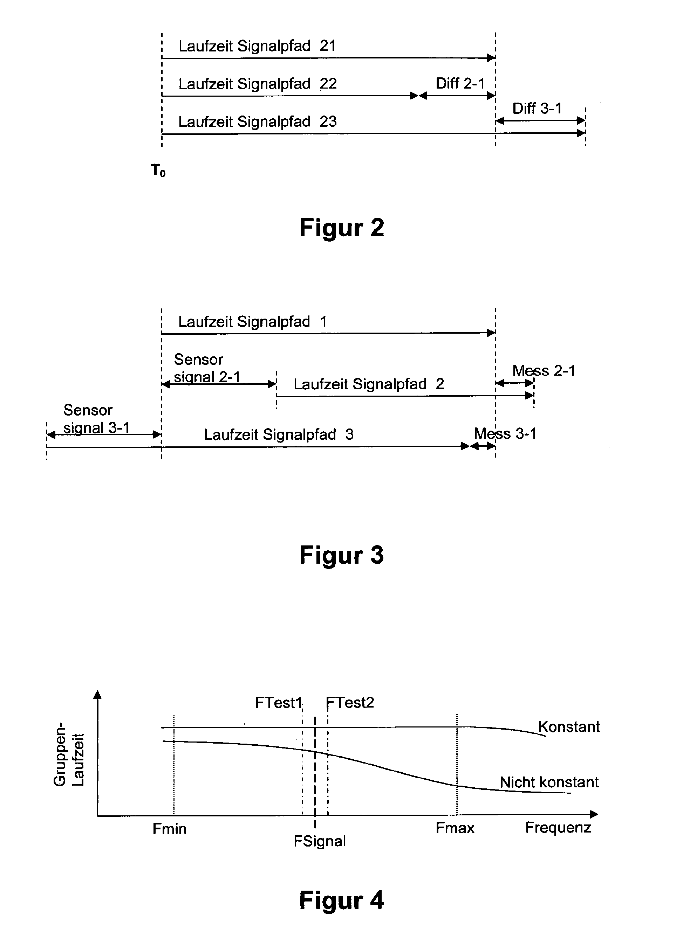

In Figur 2 ist ein Diagramm zur grafischen Darstellung von Signallaufzeiten gezeigt. Ausgehend von einem Startzeitpunkt **T₀** sind die Signallaufzeiten der Nutzsignale **1, 2** und **3** auf den Signalpfaden **21, 22** und **23** aufgetragen. Wenn die Laufzeiten in den einzelnen Signalpfaden **21, 22** und **23** gleich wären, dann würde das Testsignal **20** in den einzelnen Signalpfaden **21, 22** und **23** auch gleichzeitig in der Signalsenke **30** ankommen. Wenn es jedoch Laufzeitdifferenzen gibt, dann kommen das Testsignal **20** mit entsprechenden Zeitdifferenzen **Diff 2-1** und **Diff 3-1** in der Signalsenke **30** an. Die Zeitdifferenzen **Diff 2-1** und **Diff 3-1** sind die Differenzen der Signallaufzeiten von Signalpfad **22** gegen Signalpfad **21** bzw. Signalpfad **23** gegen Signalpfad **21.** Das besondere an dieser Erfindung ist, dass dasselbe Testsignal **20** auf alle Signalpfade **21, 22** und **23** aufaddiert wird. Dadurch ist der Startzeitpunkt **T₀** des Testsignals **20** für alle Signalpfade **21, 22** und **23** identisch. Die Signalauswertung in der Signalsenke **30** erfasst lediglich die Zeitdifferenzen **Diff 2-1** und **Diff 3-1,** zu denen das Testsignal **20** in der Signalsenke **30** eintrifft.

In der Figur 3 ist ein Beispiel für die Phasen-Messung der Messsignale gezeigt. Zwischen dem Nutzsignal **2** auf dem Signalpfad **22** und dem Nutzsignal 1 auf dem Signalpfaden **21** ist ein Zeitunterschied von **Sensorsignal 2-1** vorhanden, zum Beispiel aufgrund der Corioliskraft. Dieser wird in der Signalverarbeitung als Zeitunterschied **Mess 2-1** gemessen. Aufgrund von Laufzeitunterschieden in den Signalpfaden **21** und **22** ist zwischen **Mess 2-1** und **Sensorsignal 2-1** ein Unterschied vorhanden, der ohne Korrekturmaßnahmen einen Messfehler bedeuten würde. Der Messwert **Mess 2-1** wird nun mit der über das Testsignal **20** ermittelten Laufzeitdifferenz **Diff 2-1** korrigiert, um einen korrekten Messwert zu bekommen. Das gleiche wird für die weiteren Signalpfade **23** durchgeführt.

Das Testsignal **20** wird vorzugsweise von der Signalverarbeitung in der Signalsenke **30** kontrolliert. Diese kann das Testsignal **20** ein- und ausschalten, die Frequenz, Amplitude und Signalform einstellen. Das Testsignal **20** ist vorzugsweise ein Sinussignal. Es sind aber auch andere Signalformen möglich, beispielsweise die Überlagerung zweier Sinus-Signale unterschiedlicher Frequenz oder andere periodische Signale. Es sind auch einzelne, nichtperiodische Signale möglich. Eine Anforderung an das Testsignal **20** ist, dass die Signalauswertung in der Signalsenke **30** deren Laufzeitdifferenz möglichst gut messen kann. Ein möglicher Weg zur Erzeugung des Testsignals **20** ist ein von der Signalverarbeitung in der Signalsenke **30** angesteuerter Digital/Analog-Wandler, der dann die Testsignalquelle **10** darstellt.

Die Frequenzen der Messsignale eines Coriolis Massendurchflussmessgerätes hängen von einigen Parametern ab, vor allem von der Nennweite und dem Medium. Die minimale und maximale Frequenz werden im folgenden **Fmin** und **Fmax** genannt. Typische Werte sind beispielsweise 80Hz bis 800Hz.

Stand der Technik sind Simulationsprogramme für elektronische Schaltungen, mit denen man die Laufzeit von Signalen in analogen Schaltungen simulieren und so bestimmen kann. Die Simulationsprogramme zeigen die sogenannte Gruppenlaufzeit (Group Delay) für einen Frequenzbereich an. Damit kann man den Signaleingang simulieren und die konkrete Schaltung auslegen.

Für die Gruppenlaufzeit des Signaleingangs sind zwei Fälle zu unterscheiden, die in Figur 4 dargestellt sind. Wenn die Gruppenlaufzeit über den Frequenzbereich **Fmin** bis **Fmax** hinreichend konstant ist, dann kann die Frequenz des Testsignals **20** in dem Bereich oder auch knapp außerhalb beliebig gewählt werden. Falls die Gruppenlaufzeit jedoch nicht hinreichend konstant ist, dann sollte die Testfrequenz des Testsignals **20** nahe bei der Signalfrequenz **FSignal** liegen. Es kann auch vorgesehen sein, zwei Testfrequenzen **FTest1** und **FTest ,** welche ober- und unterhalb der Signalfrequenz **FSignal** liegen, abwechselnd oder überlagert aufzuschalten und deren Laufzeitdifferenzen zu interpolieren.

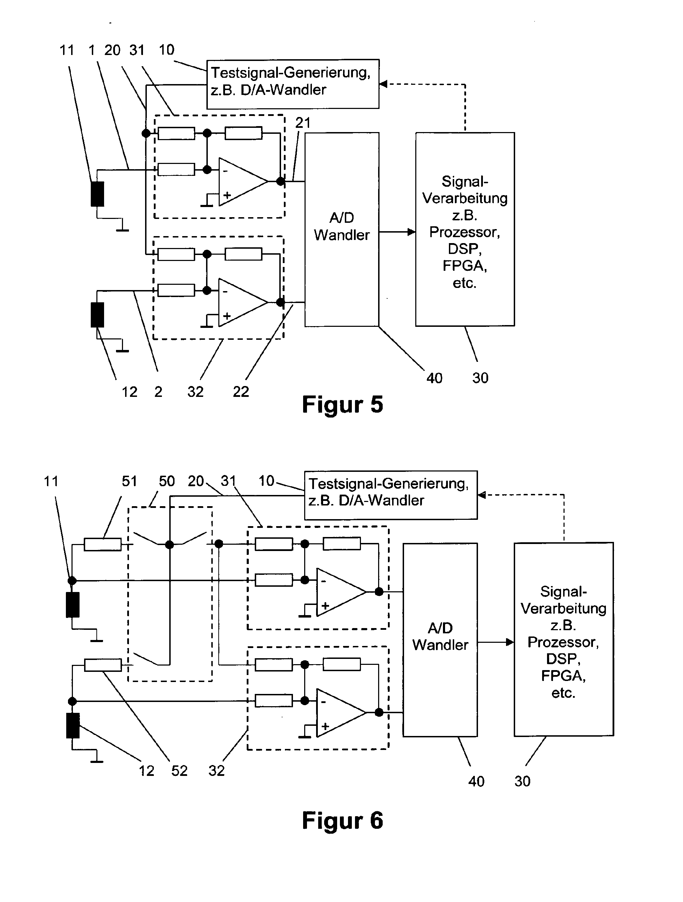

In Figur 5 ist unter Verwendung gleicher Bezugszeichen für gleiche Mittel eine Schaltungsanordnung zur Ermittlung von Laufzeitdifferenzen in Signalpfaden **21, 22** prinzipiell am Beispiel einer Sensoreinrichtung einer Durchflussmesseinrichtung dargestellt. Hierbei sind die Signalquellen **11, 12** als Sensorspulen ausgebildet. Die Signalverknüpfungen **31, 32** sind als Operationsverstärkerschaltungen ausgebildet, welche als für sich bekannte Addierer beschaltet sind. Jeder Addierer addiert zum jeweiligen Messsignal **1, 2** der Signalquellen **11, 12** das Testsignal **20** rückwirkungsfrei auf. Das Testsignal **20** hat keinen störenden Einfluss auf die Messsignalquellen **11, 12** oder die Messsignale **1, 2.**

In der Figur 5 sind nur zwei Signalpfade **21, 22** dargestellt. Es können aber auch mehr Signalpfade für weitere Signale vorgesehen sein, wie beispielsweise den Treiberstrom der Durchflussmesseinrichtung. Der Vorteil dieser Schaltung ist, dass das Testsignal **20** auf den selben Additionspunkt gegeben wird, welcher hier durch den negativen Eingang des Operationsverstärkers gebildet ist, wie das Messsignal **1, 2.** Somit wird durch das Testsignal **20** jeweils der komplette Signalpfad **21, 22** kontrolliert.

In weiterer Ausgestaltung der Erfindung kann vorgesehen sein, das Testsignal **20** wechselweise auf die Siganlverknüpfungen **31, 32** oder direkt die Signalquellen **11, 12** zu schalten.

Unter Verwendung gleicher Bezugszeichen für gleiche Mittel ist in Figur 6 eine erweiterte Schaltungsanordnung zur Ermittlung von Laufzeitdifferenzen in Signalpfaden **21, 22** prinzipiell am Beispiel einer Sensoreinrichtung einer Durchflussmesseinrichtung dargestellt. Dabei ist eine Schaltvorrichtung, welche eine Mehrzahl von Schaltern aufweist und eine wechselweise Aufschaltung des Testsignals **20** auf die Signalverknüpfungen **31, 32** oder über jeweils eine Impedanz **51, 52** auf die Sensorspulen **11, 12** erlaubt.

Bei Aufschaltung des Testsignals **20** auf die Signalverknüpfungen **31, 32** ist die Wirkungsweise gleich der Schaltungsanordnung gemäß Figur 5.

Bei Aufschaltung des Testsignals **20** auf die Sensorspule **11, 12** bildet die bekannte Impedanz **51, 52** mit der zugehörigen zu messenden Sensorspule **11, 12** jeweils einen Spannungsteiler. Die Spannung des Testsignals **20** am Spannungsteiler wird über den A/D-Wandler **40** gemessen. Neben der Ermittlung der Laufzeitdifferenzen der Signalpfade **21, 22** erlaubt diese Ausführungsform der Erfindung darüber hinaus eine Diagnose der Sensorspulen **11, 12.**

In besonderer Ausgestaltung der Erfindung wird das Testsignal **20** über einen D/A-Wandler **10** von der Signalverarbeitung in der Signalsenke **30** generiert. Vorteilhafterweise ist dann außerdem die Phase zwischen dem generierten Testsignal **20** und der Spannung am Spannungsteiler bekannt.

Insbesondere bei einer Testfrequenz des Testsignals **20** von einigen kHz ist der Phasenwinkel bis in den zweistelligen Grad bestimmbar. Aus beiden Informationen läßt sich der Widerstand R und die Induktivität L der Sensorspule **11, 12** berechnen. Vorzugsweise ist die Spulendiagnose nur auf Anforderung oder in bestimmten Zeitabständen vorgesehen.

### Bezugszeichenliste

- 1..3: Nutzsignal
- 10: Testsignalquelle
- 11..13: Signalquelle
- 20: Testsignal
- 21..23: Signalpfad
- 30: Signalsenke
- 31.. 33: Signalverknüpfung
- 40: A/D-Wandler
- 50: Schaltvorrichtung
- 51,52: Impedanz

## Patentansprüche

1. Verfahren zur Laufzeitermittlung der Nutzsignale (1, 2, 3) in einer Messeinrichtung, welche jeweils unabhängig voneinander über strukturell gleichartige Signalpfade (21, 22, 23) von einer jeweiligen Signalquelle (11, 12, 13) zu einer gemeinsamen Signalsenke (30) übertragen werden, sowie deren Korrektur,
**dadurch gekennzeichnet,**
- **dass** ein Testsignal (10) generiert wird, welches mindestens zwei Nutzsignalen (1, 2, 3) an gleichen Strukturelementen der individuellen, strukturell gleichartigen Signalpfade (21, 22, 23) gleichzeitig und gleichphasig überlagert wird,
- **dass** an der gemeinsamen Signalsenke (30) die Laufzeitdifferenzen des Testsignals (10) über die jeweiligen Signalpfade (21, 22, 23) ermittelt werden, und
- **dass** die Phasendifferenzen der Nutzsignale (1, 2, 3) über dieselben Signalpfade (21, 22, 23) des Testsignals (10) in Abhängigkeit von den ermittelten Laufzeitdifferenzen des Testsignals (10) korrigiert werden.

2. Verfahren nach Anspruch 1
**dadurch gekennzeichnet,**
**dass** dem Nutzsignal (1, 2, 3) ein periodisches Testsignal (10) überlagert wird, dessen Frequenz im Frequenzbereich des Nutzsignals (1, 2, 3) liegt.

3. Verfahren nach Anspruch 1
**dadurch gekennzeichnet,**
**dass** dem Nutzsignal (1, 2, 3) ein periodisches Testsignal (10) aus zwei Testfrequenzen (FTest1, FTest2) überlagert wird.

4. Verfahren nach Anspruch 3
**dadurch gekennzeichnet,**
**dass** die Testfrequenzen (FTest1, FTest2) die obere und die untere Grenzfrequenz (Fmin, Fmax) des Frequenzbereichs des Nutzsignals (1, 2, 3) sind.

5. Verfahren nach Anspruch 3
**dadurch gekennzeichnet,**
**dass** die Testfrequenzen (FTest1, FTest2) geringfügig größer und kleiner als die Messfrequenz (FSignal) des Nutzsignals (1, 2, 3) sind.

6. Verfahren nach einem der vorstehenden Ansprüche
**dadurch gekennzeichnet,**
**dass** das Testsignal (10) zwischen der jeweiligen Signalquelle (11, 12, 13) und dem zugehörigen Signalpfad (21, 22, 23) eingespeist wird.

7. Verfahren nach einem der Ansprüche 1 bis 5
**dadurch gekennzeichnet,**
**dass** das Testsignal (10) unmittelbar in die Signalquelle (11, 12, 13) eingespeist wird.

8. Verfahren nach Anspruch 7
**dadurch gekennzeichnet,**
**dass** das Testsignal (10) über eine Impedanz (51, 52) auf Sensorspulen (11, 12, 13) der Messeinrichtung gespeist wird.
